# FASCICULE DE BREVET EUROPEEN

(11) **EP 4 159 488 B1**
(45) Date de publication et mention de la délivrance du brevet: **06.03.2024**
(21) Numéro de dépôt: 22198336.4
(22) Date de dépôt: 28.09.2022
(51) Int. Cl.: B60C 17/04, B60C 1/00

(54) **DISPOSITIF DE ROULAGE À PLAT**
NOTLAUFVORRICHTUNG
RUNFLAT DEVICE

(30) Priorité: 30.09.2021 FR 2110328
(43) Date de publication de la demande: 05.04.2023
(73) Titulaire: HUTCHINSON, 75008 Paris (FR)
(72) Inventeur: PAGES, Marie, 78700 CONFLANS STE HONORINE (FR); JOSEPH, Vincent, 45200 MONTARGIS (FR); BRETON, Etienne, 31750 ESCALQUENS (FR)
(74) Mandataire: Gevers & Orès

(56) Documents cités:
- FR-A1- 2 294 865
- JP-A- H01 262 206
- JP-A- 2001 239 814
- JP-A- 2004 262 394
- US-A- 3 957 101

## Description

### Domaine technique de l'invention

La présente invention concerne un dispositif de roulement à plat destiné à être monté autour d'une jante, et en particulier d'une jante de roue d'un véhicule muni de pneumatiques.

### Arrière-plan technologique

Les dispositifs de roulement à plat sont connus de la technique et déjà utilisés pour différentes applications, civiles ou militaires. Le but recherché avec un tel dispositif est de permettre au véhicule de continuer à rouler en cas d'une défaillance du pneumatique de la roue sur laquelle il est monté. La défaillance du pneumatique peut par exemple être son éclatement ou son dégonflement. Le dispositif de roulement permet alors au véhicule de continuer à rouler sur une certaine distance pour pouvoir être réparé ou mis en sûreté. Le dispositif de roulement à plat doit donc répondre à des critères de performances mécaniques notamment pour supporter le poids du véhicule et/ou pour avoir une résistance balistique suffisante.

Le document US 2007 084535 A1 décrit un type de dispositif de roulement à plat destiné à être monté autour d'une jante de véhicule. Ce dispositif est divisible en plusieurs secteurs creux, lesquels sont compartimentés circonférentiellement. En outre, un tel dispositif est fabriqué en un matériau métallique ou composite à base d'une matrice en résine renforcée par des fibres de verre ou de carbone.

Le document EP 07 218 54 A1 décrit également un dispositif de roulement à plat destiné à être monté autour d'une jante de véhicule. Ce dispositif est divisible en plusieurs secteurs dont la section a une forme générale en I. En outre, un tel dispositif est fabriqué en un matériau composite comme un thermoplastique renforcé avec des fibres.

Les documents JP 2004 262394 A, JP 2001 239814 A et JP H04 262206 A décrivent d'autres exemples de dispositifs de roulement à plat destiné à être monté dans un pneumatique autour d'une jante de véhicule.

Les documents US 3 957 101 A et FR 2 294 865 A1 décrivent des pneumatiques massifs, ne comportant pas d'air comprimé à l'intérieur.

Ces dispositifs de roulement à plat peuvent néanmoins présenter plusieurs inconvénients, notamment une masse élevée qui alourdit le véhicule. La masse élevée du dispositif rend également son montage plus difficile.

L'invention propose un dispositif de roulement amélioré, permettant notamment un gain en masse tout en maintenant des performances de tenue mécanique au moins identiques aux dispositifs connus de l'art antérieur.

### Résumé de l'invention

Il est donc proposé un dispositif de roulement à plat destiné à être monté dans un pneumatique autour d'une jante de roue d'un véhicule, le dispositif comportant au moins un ensemble de deux demi-coques assemblées axialement, chaque demi-coque étant réalisée en un matériau composite à base de fibres noyées dans une résine thermoplastique ou thermodurcissable, chaque demi-coque comprenant une périphérie radialement interne, une périphérie radialement externe et une paroi latérale reliant la périphérie radialement interne à la périphérie radialement externe configurées de sorte à former un évidement interne au sein de l'au moins un ensemble et chaque demi-coque comprenant en outre une pluralité de nervures anti-compression répartie circonférentiellement, s'étendant, à l'intérieur de l'évidement interne, radialement depuis la périphérie radialement externe en direction de la périphérie radialement interne.

Ainsi, grâce à l'invention on assure un gain en masse du dispositif de roulement à plat. En effet, les demi-coques, une fois assemblées, formant un évidement interne, le dispositif se retrouve alors allégé. En outre, l'allègement du dispositif est également rendu possible par l'utilisation d'un matériau composite non métallique.

Encore grâce à l'invention, on assure le maintien de performances mécaniques. En effet, les nervures anti-compression orientées radialement permettent de diminuer la compression du dispositif de roulement à plat, celle-ci étant due à la pression exercée par le véhicule sur ses roues.

Le dispositif, selon l'invention, peut comprendre une ou plusieurs des caractéristiques ci-dessous, prises isolément les unes avec les autres ou en combinaison les unes avec les autres :
- chaque nervure anti-compression comporte un cylindre creux axialement traversant, apte à recevoir un moyen de fixation entre les deux demi-coques ;
- chaque demi-coque comporte des moyens de centrage complémentaires à des moyens de centrage de l'autre demi-coque ;
- les moyens de centrage complémentaires sont formés de pions et de creux configurés pour coopérer avec les pions et les creux de l'autre demi-coque, les pions et les creux étant répartis sur et/ou entre les nervures anti-compression de chaque demi-coque ;
- les moyens de centrage complémentaires sont formés de lèvres et de rainures configurées pour coopérer avec les lèvres et les rainures de l'autre demi-coque, les lèvres et les rainures étant situées en alternance circonférentielle à une extrémité de la périphérie radialement externe de chaque demi-coque ;
- chaque demi-coque comporte des ailettes s'étendant radialement depuis la périphérie radialement externe en direction de la périphérie radialement interne, les ailettes étant réparties circonférentiellement entre les nervures anti-compression ;
- au moins une ailette se situe entre deux nervures anti-compression ;
- les ailettes d'une demi-coque forment avec les ailettes correspondantes de l'autre demi-coque des cloisons fermées ou ouvertes en leur centre.
- chaque demi-coque comporte au niveau de sa périphérie radialement interne une pluralité de contreforts ;
- le dispositif comporte une pluralité d'ensembles de deux demi-coques, les ensembles étant attachés les uns aux autres ;
- chaque demi-coque comporte à chacune de ses extrémités un orifice traversant de fixation de sorte que chaque ensemble est fixé à l'ensemble adjacent par un système de fixation par goupille ;
- chaque demi-coque comporte une surface tronconique s'étendant circonférentiellement depuis la périphérie radialement interne en direction de la périphérie radialement externe sur au moins une partie de la paroi latérale, ladite surface tronconique étant conçue pour assurer un positionnement d'une cale entre ladite demi-coque et un talon d'un pneumatique de sorte que ledit talon du pneumatique soit bloqué contre la jante de la roue.

### Brève description des figures

L'invention sera mieux comprise à l'aide de la description qui va suivre, donnée uniquement à titre d'exemple et faite en se référant aux dessins annexés dans lesquels :
La figure 1 représente une vue schématique en perspective d'un exemple de dispositif de roulement à plat selon l'invention monté sur une jante de roue de véhicule munie d'un pneumatique,
La figure 2 représente une vue schématique partielle en perspective du dispositif de roulement à plat de la figure 1,
La figure 3 représente une vue schématique en coupe transversale du dispositif de roulement à plat des figures 1 et 2,
La figure 4 représente une vue schématique en perspective d'un exemple de demi-coque selon l'invention, en particulier sa partie interne,
La figure 5 représente une autre vue schématique en perspective de la demi-coque de la figure 4, en particulier sa partie externe,
La figure 6 représente une vue schématique en perspective d'un ensemble de deux demi-coques selon les figures 4 et 5,
La figure 7 représente une vue schématique partielle en perspective de l'ensemble de la figure 6,
La figure 8 représente une vue schématique en perspective d'un autre exemple de demi-coque selon l'invention, en particulier sa partie interne,
La figure 9 représente une autre vue schématique en perspective de la demi-coque de la figure 8, en particulier sa partie externe,
La figure 10 représente une vue schématique en perspective d'un ensemble de deux demi-coques selon les figures 8 et 9,
La figure 11 représente une vue schématique partielle en perspective de l'ensemble de la figure 10, et
La figure 12 est un diagramme illustrant un cycle de température durant le procédé de fabrication d'une demi-coque selon l'invention.

### Description détaillée de l'invention

Dans ce qui suit, il est fait référence à un dispositif 10 de roulement à plat destiné à être monté autour d'une jante 1 de roue d'un véhicule, et en particulier d'une roue munie d'un pneumatique 2.

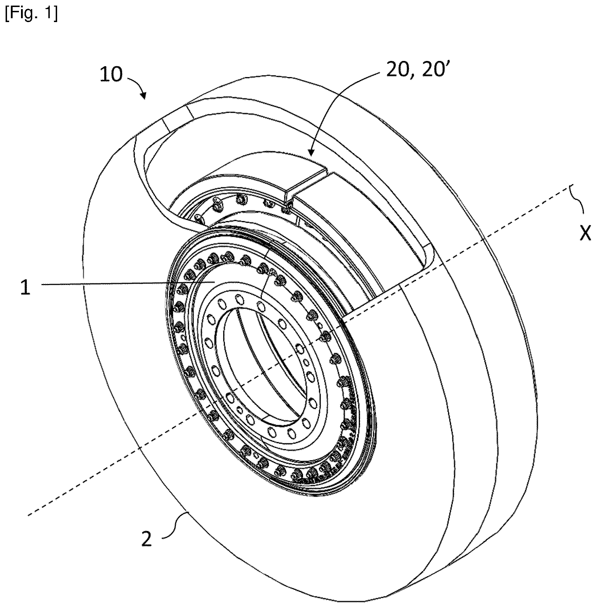

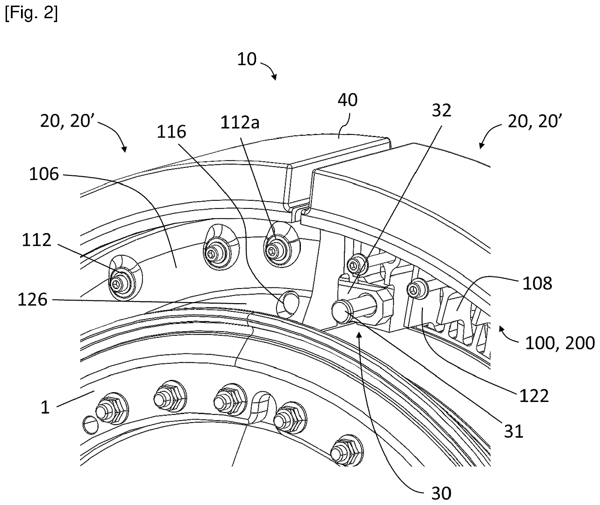

Les figures 1 à 3 illustrent un dispositif 10 de roulement à plat monté autour d'une jante 1 et entouré d'un pneumatique 2. Ce dispositif 10 s'étend autour d'un axe de rotation X qui, en utilisation, est confondu avec l'axe de la jante 1 de la roue du véhicule. Le dispositif 10 comporte au moins un ensemble 20, 20' de deux demi-coques 100, 200. Dans l'exemple des figures 1 et 2, le dispositif 10 comprend plusieurs ensembles 20, 20'. Ces ensembles 20, 20' sont fixés les uns aux autres à l'aide d'un système 30 de fixation par goupille 31. Ce système 30 de fixation peut comprendre une plaque 32 de raccordement intercalée entre deux ensembles 20, 20'. Cette plaque 32 comporte des perforations configurées pour le passage de goupilles 31. Une première goupille 31 traverse alors la plaque 32 et un premier ensemble 20 tandis qu'une seconde goupille 31 traverse la plaque 32 et un deuxième ensemble 20, 20'. De manière facultative, une bande 40 en caoutchouc peut recouvrir la périphérie radialement externe 104 de chaque ensemble 20, 20'.

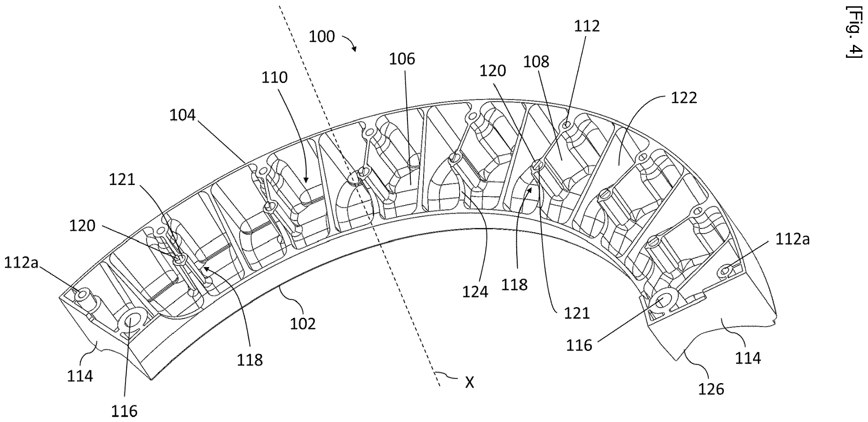

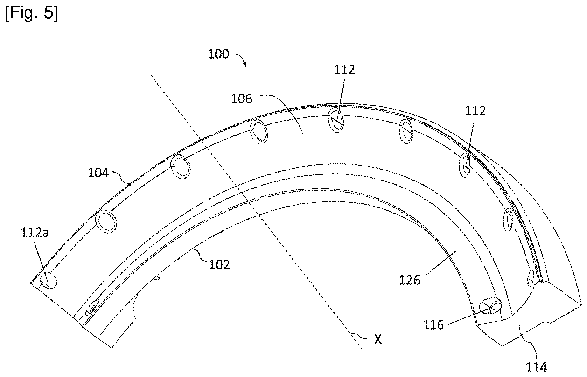

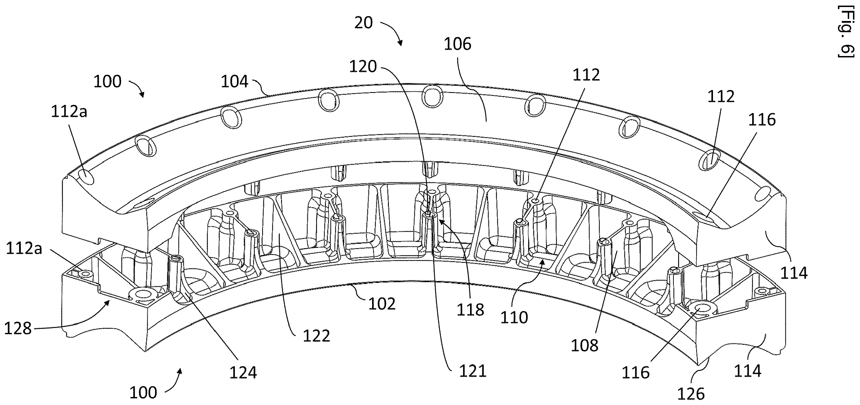

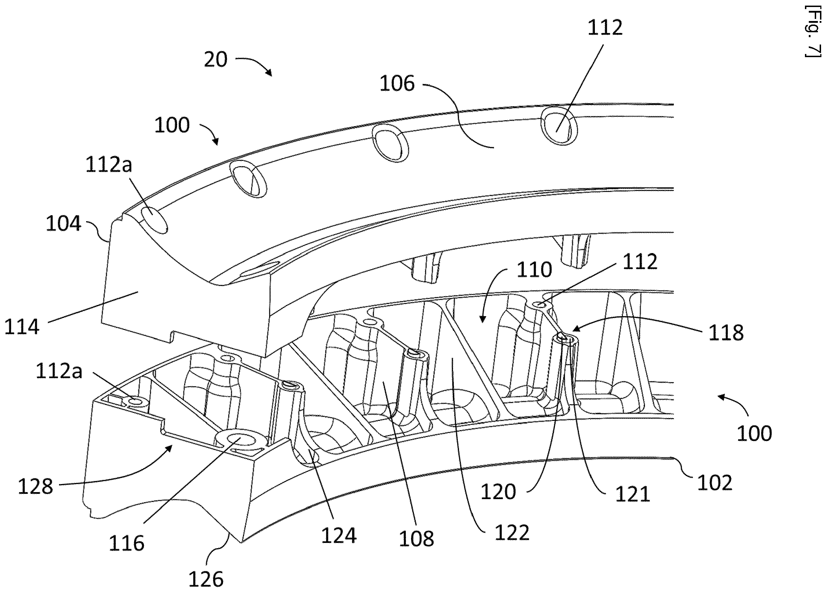

Les figures 4 et 5 montrent un exemple de demi-coque 100 utilisée pour former un ensemble 20, illustré par les figures 6 et 7, faisant partie du dispositif 10 de roulement à plat. Chaque demi-coque 100 comprend une périphérie radialement interne 102, une périphérie radialement externe 104 et une paroi latérale 106 reliant la périphérie radialement interne 102 à la périphérie radialement externe 104. La périphérie radialement interne 102 peut présenter une surface cylindrique ou conique.

Chacune de ces demi-coques 100 est réalisée en un matériau composite à base de fibres noyées dans une résine. Il doit être compris que le terme « fibres » peut désigner des fibres courtes, i.e. de taille strictement inférieure à 10 millimètres. Cela permet notamment de limiter la propagation de fissures dans les demi-coques 100. Ce terme peut également désigner des fibres longues, i.e. de taille supérieure ou égale à 10 millimètres. Cela permet notamment d'améliorer la résistance mécanique. De manière plus générale, il est également possible que les fibres soient des fibres continues. À noter qu'il est possible d'utiliser un mélange de ces deux types de fibres pour une même pièce de sorte à obtenir un effet technique hybride.

La taille des fibres est donc choisie de manière à trouver un compromis entre les caractéristiques précitées.

Les fibres peuvent par exemple être, de façon non limitative, des fibres de verre ou de carbone. La résine peut être thermoplastique ou thermodurcissable et peut par exemple être, de façon non limitative, en polyépoxyde, vinylester, phénolique ou polyester.

Chaque demi-coque 100 comprend en outre une pluralité de nervures 108 anti-compression. Ces nervures 108 anti-compression sont réparties circonférentiellement et s'étendent radialement depuis la périphérie radialement externe 104 en direction de la périphérie radialement interne 102.

La section de chaque demi-coque 100 peut par exemple être en forme générale de U, W, Ω ou autre, de sorte qu'une fois assemblées axialement deux demi-coques 100 définissent un évidement 110 interne à l'intérieur duquel sont situées les nervures 108. Cet évidement 110 contribue à alléger la demi-coque 100 et par conséquent le dispositif 10 de roulement à plat.

Les nervures 108 anti-compression permettent de renforcer l'ensemble 20 et le dispositif 10 de roulement à plat une fois les demi-coques 100 assemblées. Ces nervures 108 permettent également de transmettre vers la jante 1 la charge appliquée sur la périphérie radialement externe 104. Ces nervures 108 peuvent chacune comprendre un cylindre creux 112 axialement traversant, apte à recevoir un moyen de fixation entre les deux demi-coques 100.

Chaque demi-coque 100 peut comporter des extrémités circonférentielles 114 au niveau desquelles peut se situer un cylindre creux additionnel 112a axialement traversant, apte à recevoir un moyen de fixation entre les deux demi-coques 100. Au niveau de ses extrémités circonférentielles 114 peut également se situer un orifice 116, axialement traversant, par lequel une goupille 31 du système 30 de fixation est destinée à passer.

Chaque demi-coque 100 peut comporter des moyens de centrage 118 complémentaires à des moyens de centrage 118 d'une autre demi-coque 100.

Dans l'exemple des figures 4 à 7, ces moyens de centrage 118 sont situés sur les nervures 108, et plus particulièrement sur chaque nervure 108. En variante, non représentée, les moyens de centrage 118 peuvent être répartis sur une nervure 108 sur deux. Chaque moyen de centrage 118 peut comporter un pion 120 en forme de demi-cylindre et un creux 121 en contre-forme de ce-même pion 120, le pion 120 étant en saillie du creux 121. En utilisation, le pion 120 d'une demi-coque 100 est configuré pour coopérer avec le creux 121 de l'autre demi-coque 100. Autrement dit, les pions 120 et les creux 121 sont répartis sur et/ou entre les nervures 108 de chaque demi-coque 100.

Dans une variante, non représentée, les moyens de centrage 118 sont formés de pions et de creux répartis alternativement dans les nervures 108. Les pions 120 et les creux 121 d'une demi-coque 100 sont configurés pour coopérer avec les creux 121 et les pions 120 de l'autre demi-coque 100. Dans une telle configuration, chaque demi-coque 100 comporte une seule nervure 108 ou un nombre pair de nervures 108.

Chaque demi-coque 100 peut également comporter des ailettes 122 s'étendant radialement depuis la périphérie radialement externe 104 en direction de la périphérie radialement interne 102. Les ailettes 122 sont réparties circonférentiellement entre les nervures 108. Dans l'exemple des figures 4 à 7, au moins une ailette 122 est située entre deux nervures 108.

Les ailettes 122 peuvent avoir, de façon non limitative, une forme globalement triangulaire ou rectangulaire. En utilisation, les ailettes 122 d'une demi-coque 100 forment avec les ailettes 122 correspondantes de l'autre demi-coque 100 des cloisons. Ces cloisons permettent de rigidifier radialement l'ensemble 20. Ces cloisons peuvent être ouvertes ou fermées en leur centre, selon la rigidité recherchée.

Les ailettes 122 sont orientées comme les nervures 108 et permettent d'améliorer la tenue mécanique du dispositif 10 une fois celui-ci assemblé, en renforçant notamment sa résistance à la compression.

On comprend que l'alternance des nervures 108 et des ailettes 122 forme un motif qui se répète. Dans l'exemple des figures 4 à 7, la demi-coque 100 compte sept nervures 108 et neuf ailettes 122. Cette configuration n'est pas limitative et la demi-coque 100 pourrait compter plus ou moins de nervures 108 et/ou d'ailettes 122.

Chaque demi-coque 100 peut comporter, au niveau de sa périphérie radialement interne 102, une pluralité de contreforts 124 anti-flexion. Ces contreforts 124 anti-flexion sont répartis circonférentiellement et s'étendent radialement depuis la périphérie radialement interne 102 en direction de la périphérie radialement externe 104. Les contreforts 124 peuvent être situés dans le prolongement des nervures 108.

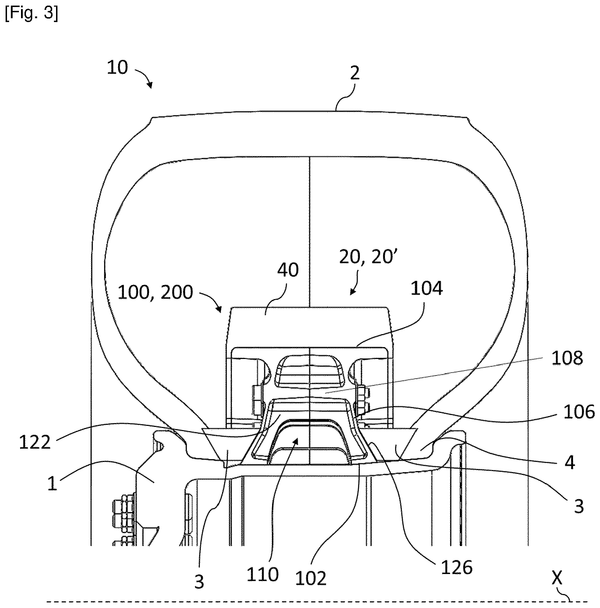

Avantageusement, chaque demi-coque 100 comporte également une surface tronconique 126. La surface tronconique 126 s'étend circonférentiellement depuis la périphérie radialement interne 102 en direction de la périphérie radialement externe 104 sur au moins une partie de la paroi latérale 106. Cette surface tronconique 126 est conçue pour permettre le positionnement d'une cale 3, représentée sur la figure 3, entre la demi-coque 100 et le talon 4 du pneumatique 2 de sorte que le talon 4 du pneumatique 2 soit bloqué contre la jante 1 de la roue. Les contreforts 124 anti-flexion ont pour but d'empêcher, en utilisation, la flexion de cette zone du dispositif 10 comportant la surface tronconique 126 et ainsi soutenir la cale 3 de talon de pneumatique 4.

Les figures 6 et 7 montrent une vue éclatée de l'ensemble 20. Sur ces vues, l'ensemble 20 comprend une fente 128 formée par un épaulement situé à chaque extrémité 114 des demi-coques 100. Cette fente 128 est configurée pour accueillir le système 30 de fixation, et en particulier la plaque 32 de raccordement, pour fixer entre eux les ensembles 20.

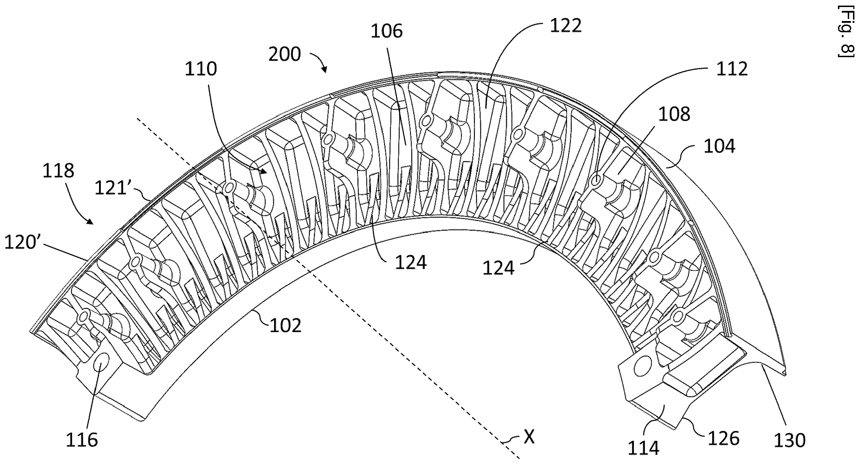

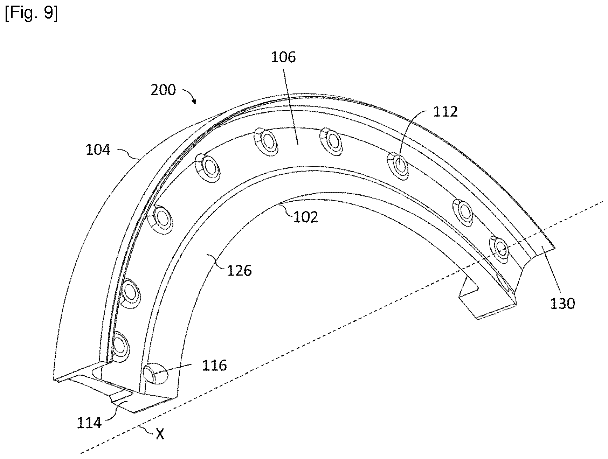

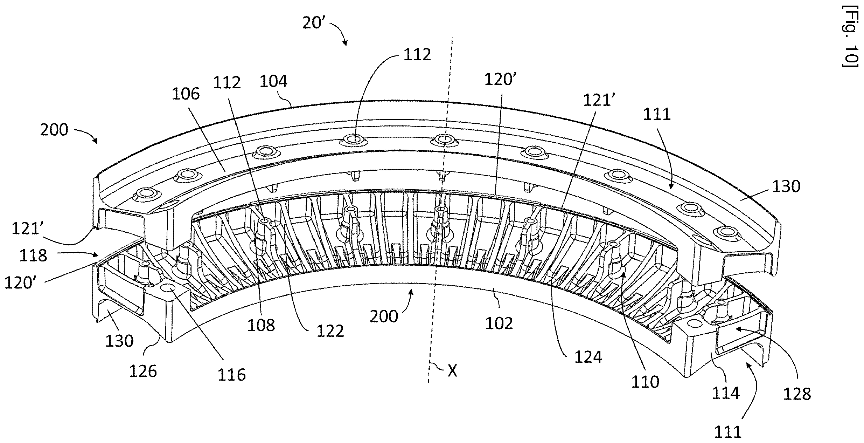

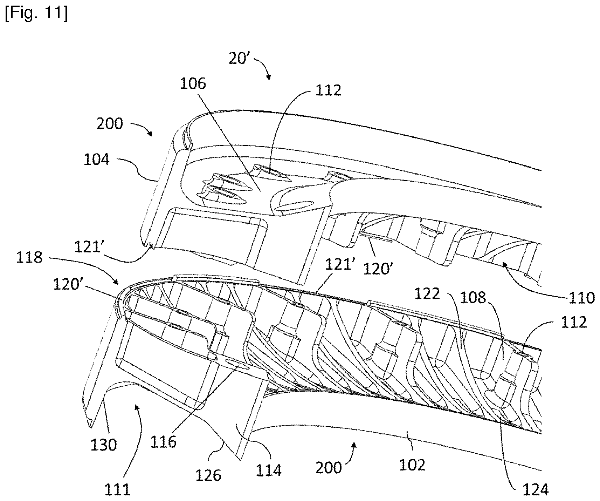

Les figures 8 à 11 montrent un autre exemple de demi-coque 200 et d'ensemble 20'. Chaque demi-coque 200 est très similaire à la demi-coque 100 décrite dans ce qui précède. Ainsi, chaque demi-coque 200 est réalisée en un matériau composite à base de fibres noyées dans une résine thermoplastique ou thermodurcissable. Chaque demi-coque 200 comprend une périphérie radialement interne 102, une périphérie radialement externe 104 et une paroi latérale 106 reliant la périphérie radialement interne 102 à la périphérie radialement externe 104. Chaque demi-coque 200 peut également comprendre une surface tronconique 126 comme définie précédemment. Chaque demi-coque 200 comprend en outre une pluralité de nervures 108 anti-compression répartie circonférentiellement et s'étendant radialement depuis la périphérie radialement externe 104 en direction de la périphérie radialement interne 102. La section de chaque demi-coque 200 peut par exemple être en forme générale de U, W, Ω ou autre de sorte que l'assemblage axial de deux demi-coques 200, formant un ensemble 20', définit un évidement 110 interne à l'intérieur duquel sont situées les nervures 108.

Chaque nervure 108 d'une demi-coque 200 peut comporter un cylindre creux 112 axialement traversant, similaire à ce qui a été décrit précédemment, apte à recevoir un moyen de fixation entre deux demi-coques 200.

Chaque demi-coque 200 peut comporter des moyens de centrage 118 complémentaires à des moyens de centrage 118 d'une autre demi-coque 200.

Dans l'exemple des figures 8 à 11, ces moyens de centrage 118 sont formés de lèvres 120' et de rainures 121' configurées pour coopérer avec les lèvres 120' et les rainures 121' de l'autre demi-coque 200. Les lèvres 120' et les rainures 121' sont situées en alternance circonférentielle à une extrémité de la périphérie radialement externe 104 de chaque demi-coque 200.

Autrement dit, seuls les cylindre creux 112 sont situés sur les nervures 108.

Chaque demi-coque 200 peut comporter des ailettes 122 s'étendant radialement depuis la périphérie radialement externe 104 en direction de la périphérie radialement interne 104. Les ailettes 122 sont réparties circonférentiellement entre les nervures 108. Dans l'exemple des figures 8 à 11, au moins deux ailettes 122 se situent entre deux nervures 108.

Chaque demi-coque 200 peut comporter, au niveau de sa périphérie radialement interne 102, une pluralité de contreforts 124 anti-flexion. Ces contreforts 124 anti-flexion sont répartis circonférentiellement et s'étendent radialement depuis la périphérie radialement interne 102 en direction de la périphérie radialement externe 104. Un contrefort 124 peut être intercalé entre une ailette 122 et une nervure 108 ou entre deux ailettes 122.

Dans l'exemple des figures 8 à 11, la paroi latérale 106, s'étendant entre la périphérie radialement interne 102 et la périphérie radialement externe 104, est agencée de sorte à former un rebord annulaire 130 au niveau de la périphérie radialement externe 104. De la sorte, en plus de l'évidement 110 interne, un évidemment 111 externe est formé. Ce qui permet un allègement de la demi-coque 200.

En outre, chacune des demi-coques 100, 200 décrites précédemment peut être monobloc. Nervures 108, moyens de centrages 118, ailettes 122 et contreforts 124 sont alors venus de matière avec la demi-coque 100, 200.

Les demi-coques 100, 200 du dispositif 10 de roulement à plat peuvent être démontables et interchangeables.

Il apparaît clairement que le dispositif de roulement à plat selon l'invention permet d'allier légèreté et résistance. Ces caractéristiques permettent notamment de diminuer la masse totale du dispositif de roulement à plat, et donc du véhicule destiné à en être équipé, tout en maintenant les performances mécaniques liées à la compression et à la flexion.

Un autre avantage est l'amélioration de la maintenance du dispositif lorsque celui-ci comprend des demi-coques démontables et interchangeables, il est possible de remplacer uniquement la demi-coque endommagée par une neuve, sans avoir à remplacer l'ensemble du dispositif. De la sorte, une économie peut être réalisée.

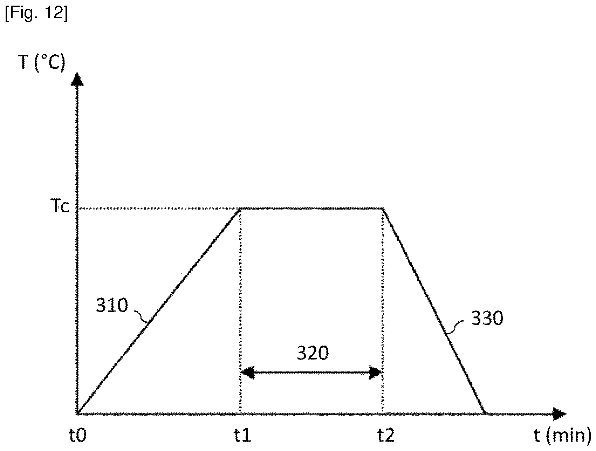

En outre, la fabrication des demi-coques 100, 200 est simplifiée lorsque chaque demi-coque 100, 200 est une seule pièce monobloc. En effet, la demi-coque 100, 200 peut être fabriquée par thermocompression. Dans un tel procédé de fabrication, le matériau composant la demi-coque 100, 200, autrement dit les fibres noyées dans la résine, est chauffé et mis en forme à l'aide d'un moule et d'un contre-moule. La mise en forme de la demi-coque 100, 200 lors du procédé de thermocompression respecte un cycle de température dont un exemple est présenté sur la figure 12.

À une étape 310, durant une phase de préchauffage, le matériau est préchauffé de t0 à t1, dans le moule ou hors moule ; t1 correspondant au temps nécessaire pour atteindre une température de consigne, notée Tc. Cette température de consigne Tc est aussi appelée température de cuisson.

À une étape 320, durant une phase de cuisson, le matériau est cuit, dans son moule, à la température de cuisson Tc. Cette température Tc est propre à chaque type de résine. Pour une résine donnée, la température Tc peut être par exemple de 150°C. La cuisson du matériau à la température Tc s'étend de t1 à t2 et ce temps de cuisson varie également en fonction de la résine, pour une résine donnée il peut être par exemple de 60 minutes.

À une étape 330, durant une phase de refroidissement, le moule contenant le matériau mis en forme d'une demi-coque 100, 200 se refroidit à partir de t2 pour atteindre une température de démoulage, température à laquelle la demi-coque 100, 200 peut être démoulée.

## Revendications

1. Dispositif (10) de roulement à plat destiné à être monté dans un pneumatique autour d'une jante de roue d'un véhicule, le dispositif comportant au moins un ensemble (20, 20') de deux demi-coques (100, 200) assemblées axialement, chaque demi-coque (100, 200) étant réalisée en un matériau composite à base de fibres noyées dans une résine thermoplastique ou thermodurcissable, chaque demi-coque (100, 200) comprenant une périphérie radialement interne (102), une périphérie radialement externe (104) et une paroi latérale (106) reliant la périphérie radialement interne (102) à la périphérie radialement externe (104) configurées de sorte à former un évidement (110) interne au sein dudit au moins un ensemble (20, 20') et chaque demi-coque (100, 200) comprenant en outre une pluralité de nervures (108) anti-compression répartie circonférentiellement, s'étendant, à l'intérieur de l'évidement (110) interne, radialement depuis la périphérie radialement externe (104) en direction de la périphérie radialement interne (102).

2. Dispositif (10) selon la revendication 1, dans lequel chaque nervure (108) anti-compression comporte un cylindre creux (112) axialement traversant, apte à recevoir un moyen de fixation entre les deux demi-coques (100, 200).

3. Dispositif (10) selon l'une des revendications 1 ou 2, dans lequel chaque demi-coque (100, 200) comporte des moyens de centrage (118) complémentaires à des moyens de centrage (118) de l'autre demi-coque (100, 200).

4. Dispositif (10) selon la revendication 3, dans lequel lesdits moyens de centrage (118) complémentaires sont formés de pions (120) et de creux (121) configurés pour coopérer avec les pions (120) et les creux (121) de l'autre demi-coque (100), lesdits pions (120) et lesdits creux (121) étant répartis sur et/ou entre les nervures (108) anti-compression de chaque demi-coque (100).

5. Dispositif (10) selon la revendication 3, dans lequel lesdits moyens de centrage (118) complémentaires sont formés de lèvres (120') et de rainures (121') configurées pour coopérer avec les lèvres (120') et les rainures (121') de l'autre demi-coque (200), lesdites lèvres (120') et lesdites rainures (121') étant situées en alternance circonférentielle à une extrémité de la périphérie radialement externe (104) de chaque demi-coque (200).

6. Dispositif (10) selon l'une quelconque des revendications 1 à 5, dans lequel chaque demi-coque (100, 200) comporte des ailettes (122) s'étendant radialement depuis la périphérie radialement externe (104) en direction de la périphérie radialement interne (102), lesdites ailettes (122) étant réparties circonférentiellement entre les nervures (108) anti-compression.

7. Dispositif (10) selon la revendication 6, dans lequel au moins une ailette (122) se situe entre deux nervures (108) anti-compression.

8. Dispositif (10) selon l'une des revendications 6 ou 7, dans lequel les ailettes (122) d'une demi-coque (100, 200) forment avec les ailettes (122) correspondantes de l'autre demi-coque (100, 200) des cloisons fermées ou ouvertes en leur centre.

9. Dispositif (10) selon l'une quelconque des revendications 1 à 8, dans lequel chaque demi-coque (100, 200) comporte au niveau de sa périphérie radialement interne (102) une pluralité de contreforts (124).

10. Dispositif (10) selon l'une quelconque des revendications 1 à 9, comportant une pluralité d'ensembles (20, 20') de deux demi-coques (100, 200), lesdits ensembles (20, 20') étant attachés les uns aux autres.

11. Dispositif (10) selon la revendication 10, dans lequel chaque demi-coque (100, 200) comporte à chacune de ses extrémités (114) un orifice (116) traversant de fixation de sorte que chaque ensemble (20, 20') est fixé à l'ensemble adjacent par un système (30) de fixation par goupille (31).

12. Dispositif (10) selon l'une quelconque des revendications 1 à 11, dans lequel chaque demi-coque (100, 200) comporte une surface tronconique (126) s'étendant circonférentiellement depuis la périphérie radialement interne (102) en direction de la périphérie radialement externe (104) sur au moins une partie de la paroi latérale (106), ladite surface tronconique (126) étant conçue pour assurer un positionnement d'une cale (3) entre ladite demi-coque (100, 200) et un talon (4) d'un pneumatique (2) de sorte que ledit talon du pneumatique soit bloqué contre la jante de la roue.

## Patentansprüche

1. Notlaufvorrichtung (10), die dazu bestimmt ist, in einem Reifen um eine Radfelge eines Fahrzeugs herum montiert zu werden, wobei die Vorrichtung mindestens eine Einheit (20, 20') aus zwei axial zusammengesetzten Halbschalen (100, 200) beinhaltet, wobei jede Halbschale (100, 200) aus einem Verbundwerkstoff auf Grundlage von in ein thermoplastisches oder wärmehärtbares Harz getränkten Fasern hergestellt ist, jede Halbschale (100, 200) eine radial innere Peripherie (102), eine radial äußere Peripherie (104) und eine Seitenwand (106) umfasst, welche die radial innere Peripherie (102) mit der radial äußeren Peripherie (104) verbindet, die konfiguriert sind, um eine innere Aussparung (110) innerhalb der mindestens einen Einheit (20, 20') zu bilden, und jede Halbschale (100, 200) weiter eine Vielzahl von Kompressionsschutzrippen (108) umfasst, die am Umfang verteilt sind, die sich im Inneren der inneren Aussparung (110) radial aus der radial äußeren Peripherie (104) in Richtung der radial inneren Peripherie (102) erstrecken.

2. Vorrichtung (10) nach Anspruch 1, wobei jede Kompressionsschutzrippe (108) einen axial durchgehenden Hohlzylinder (112) beinhaltet, der imstande ist, ein Befestigungsmittel zwischen den beiden Halbschalen (100, 200) aufzunehmen.

3. Vorrichtung (10) nach einem der Ansprüche 1 oder 2, wobei jede Halbschale (100, 200) ergänzende Zentriermittel (118) zu den Zentriermitteln (118) der anderen Halbschale (100, 200) beinhaltet.

4. Vorrichtung (10) nach Anspruch 3, wobei die ergänzenden Zentriermittel (118) aus Stiften (120) und aus Vertiefungen (121) gebildet sind, um mit den Stiften (120) und den Vertiefungen (121) der anderen Halbschale (100) zusammenzuwirken, wobei die Stifte (120) und die Vertiefungen (121) auf und/oder zwischen den Kompressionsschutzrippen (108) einer jeden Halbschale (100) verteilt sind.

5. Vorrichtung (10) nach Anspruch 3, wobei die ergänzenden Zentriermittel (118) aus Lippen (120') und aus Nuten (121') gebildet sind, die konfiguriert sind, um mit den Lippen (120') und den Nuten (121') der anderen Halbschale (200) zusammenzuwirken, wobei sich die Lippen (120') und die Nuten (121') am Umfang abwechselnd an einem Ende der radial äußeren Peripherie (104) einer jeden Halbschale (200) befinden.

6. Vorrichtung (10) nach einem der Ansprüche 1 bis 5, wobei jede Halbschale (100, 200) Flügel (122) beinhaltet, die sich radial aus der radial äußeren Peripherie (104) in Richtung der radial inneren Peripherie (102) erstrecken, wobei die Flügel (122) am Umfang zwischen den Kompressionsschutzrippen (108) verteilt sind.

7. Vorrichtung (10) nach Anspruch 6, wobei sich mindestens ein Flügel (122) zwischen zwei Kompressionsschutzrippen (108) befindet.

8. Vorrichtung (10) nach einem der Ansprüche 6 oder 7, wobei die Flügel (122) einer Halbschale (100, 200) mit den entsprechenden Flügeln (122) der anderen Halbschale (100, 200) in ihrer Mitte geschlossene oder offene Wände bilden.

9. Vorrichtung (10) nach einem der Ansprüche 1 bis 8, wobei jede Halbschale (100, 200) im Bereich ihrer radial inneren Peripherie (102) eine Vielzahl von Streben (124) beinhaltet.

10. Vorrichtung (10) nach einem der Ansprüche 1 bis 9, welche eine Vielzahl von Einheiten (20, 20') von Halbschalen (100, 200) beinhaltet, wobei die Einheiten (20, 20') aneinander befestigt sind.

11. Vorrichtung (10) nach Anspruch 10, wobei jede Halbschale (100, 200) an jedem ihrer Enden (114) eine durchgehende Fixierungsöffnung (116) beinhaltet, sodass jede Einheit (20, 20') an der benachbarten Einheit durch ein Fixierungssystem (30) mit einem Stift (31) fixiert ist.

12. Vorrichtung (10) nach einem der Ansprüche 1 bis 11, wobei jede Halbschale (100, 200) eine kegelstumpfförmige Fläche (126) beinhaltet, die sich im Umfang von der radial inneren Peripherie (102) in Richtung der radial äußeren Peripherie (104) über mindestens einen Teil der Seitenwand (106) erstreckt, wobei die kegelstumpfförmige Fläche (126) gestaltet ist, um für eine Positionierung eines Keils (3) zwischen der Halbschale (100, 200) und einem Wulst (4) eines Reifens (2) zu sorgen, sodass der Wulst des Reifens an der Felge des Rades blockiert wird.

## Claims

1. A run flat device (10) intended to be mounted in a tyre around a wheel rim of a vehicle, the device comprising at least one assembly (20, 20') of two half-shells (100, 200) assembled axially, each half-shell (100, 200) being made of a composite material based on fibres embedded in a thermoplastic or thermosetting resin, each half-shell (100, 200) comprising a radially internal periphery (102) a radially external periphery (104) and a lateral wall (106) connecting the radially internal periphery (102) to the radially external periphery (104) configured so as to form an internal recess (110) within said at least one assembly (20, 20') and each half-shell (100, 200) further comprising a plurality of circumferentially distributed anti-compression ribs (108) extending, within the internal recess (110), radially from the radially external periphery (104) towards the radially internal periphery (102).

2. The device (10) according to claim 1, wherein each anti-compression rib (108) comprises a hollow cylinder (112) passing axially through it, suitable for receiving a means of attachment between the two half-shells (100, 200).

3. The device (10) according to any of claims 1 or 2, wherein each half-shell (100, 200) comprises centring means (118) complementary to centring means (118) of the other half-shell (100, 200).

4. The device (10) according to claim 3, wherein said complementary centring means (118) are formed by pins (120) and hollows (121) configured to cooperate with the pins (120) and the hollows (121) of the other half-shell (100), said pins (120) and said hollows (121) being distributed on and/or between the anti-compression ribs (108) of each half-shell (100).

5. The device (10) according to claim 3, wherein said complementary centring means (118) are formed by lips (120') and grooves (121') configured to cooperate with the lips (120') and the grooves (121') of the other half-shell (200), said lips (120') and said grooves (121') being located in circumferential alternation at one end of the radially external periphery (104) of each half-shell (200).

6. The device (10) according to any one of claims 1 to 5, wherein each half-shell (100, 200) comprises fins (122) extending radially from the radially external periphery (104) towards the radially internal periphery (102), said fins (122) being circumferentially distributed between the anti-compression ribs (108).

7. The device (10) of claim 6, wherein at least one fin (122) is located between two anti-compression ribs (108).

8. The device (10) according to one of claims 6 or 7, wherein the fins (122) of a half-shell (100, 200) form closed or open partitions in their centre with the corresponding fins (122) of the other half-shell (100, 200).

9. The device (10) according to any one of claims 1 to 8, wherein each half-shell (100, 200) comprises at the level of its radially internal periphery (102) a plurality of buttresses (124).

10. The device (10) according to any one of claims 1 to 9, comprising a plurality of assemblies (20, 20') of two half-shells (100, 200), said assemblies (20, 20') being attached to each other.

11. The device (10) according to claim 10, wherein each half-shell (100, 200) comprises at each of its ends (114) an attachment through orifice (116) so that each assembly (20, 20') is attached to the adjacent assembly by an attachment system (30) with cotter pin (31).

12. The device (10) according to any one of claims 1 to 11, wherein each half-shell (100, 200) comprises a frustoconical surface (126) extending circumferentially from the radially internal periphery (102) towards the radially external periphery (104) over at least one portion of the lateral wall (106), said frustoconical surface (126) being designed to ensure a positioning of a wedge (3) between said half-shell (100, 200) and a bead (4) of a tyre (2) so that said bead of the tyre is locked against the rim of the wheel.
